# EUROPEAN PATENT SPECIFICATION

(11) **EP 3 127 341 B1**
(45) Date of publication and mention of the grant of the patent: **27.06.2018**
(21) Application number: 14716534.4
(22) Date of filing: 31.03.2014
(51) Int. Cl.: H04N 21/44, H04N 21/485

(54) **IMAGE DISPLAY DEVICE WITH AUTOMATIC MENU LANGUAGE UPDATE FUNCTION**
BILDANZEIGEVORRICHTUNG MIT FUNKTION FÜR AUTOMATISCHE MENÜSPRACHENAKTUALISIERUNG
DISPOSITIF D'AFFICHAGE D'IMAGE À FONCTION DE MISE À JOUR DE LANGUE DE MENU AUTOMATIQUE

(43) Date of publication of application: 08.02.2017
(73) Proprietor: Arçelik Anonim Sirketi, 34950 Istanbul (TR)
(72) Inventor: SAMDAN, Emrah, Tuzla 34950 Istanbul (TR); TURNA, Mustafa, Tuzla 34950 Istanbul (TR); ERTAS, Engin, Tuzla 34950 Istanbul (TR)
(86) International application number: PCT/EP2014/056454
(87) International publication number: WO 2015/149839

(56) References cited:
- WO-A2-2011/039763
- JP-A- 2008 225 888
- KR-A- 20090 119 113
- US-A1- 2006 034 590

## Description

The present invention relates to an image display device having an automatic menu language update function called in case a predetermined set of conditions are fulfilled and requiring no user intervention.

Digital and interactive TV systems provide a comprehensive amount of TV channels and programs leading to the general outcome that conventional methods for configuring the operation of the image display device from among a plurality of setting parameters may become inefficient to the extent that it is unperformable in a time-saving manner.

The interface language to be used in an image display device is generally selected during the initial set-up and left at the selected setting for a prolonged period of time, like years. However, it is to be noted that an image display device can also be used for educational purposes in schools and installable in other setups including offices, meeting rooms, hotels and so on where a plurality of users may interact with the device. To this end, it is not always possible for a temporary user to select a desired menu language by way of selecting a respective menu in the interface environment, which is not easily directly accessible in all cases. In any cases, a temporary guest in a hotel is less likely to dive into the interface menu and look for the exact location of the setting. In many cases this is not preferred; the user gives up at some point and tries to content himself with what is available to him.

Accordingly, configuration of menu language settings can be better managed and users can be offered a less troublesome viewing experience without having to manually switch to a desired language setting. The present invention therefore solves the technical problem of automatically enabling a temporary user to access menu items in his/her preferred language such that he/she will not need to manually fiddle with the setting of the image display device.

Among others, one of the prior art disclosures in the technical field of the present invention can be referred to as EP1833244, which discloses a method and apparatus for setting a language in a television receiver that enables one language setting operation performed in a first menu, corresponding to one of a plurality of language-specific functions, to automatically set a preferred language for one or more other functions. The method includes steps of setting a language in a first menu according to a user selection, the first menu corresponding to one function of a plurality of language-specific functions; and automatically setting a language of at least one other function of the plurality of language-specific functions to the language set according to the user selection, the language of the at least one other function being set interoperably with the first menu. Thus, if at least one language is selected in the first menu, a language of at least one other function is set to the first-menu language. Upon powering a television receiver receiving a transport stream from a broadcasting station, a tuner tunes a broadcast signal of a corresponding channel, whereupon additional information is parsed from the tuned transport stream to extract information of every language being provided. The extracted information is then stored in memory so that, according to a user selection of a first menu for performing a language setting operation, the stored language information can be simultaneously output as an audio signal and displayed on a screen to enable user recognition.

Another prior art, KR20090119113 discloses a method for automatically set the language of the interface menu in order to cope with the problem that the user might not read the language in which the initial interface is written. This is achieved by determining the language of the channel having the strongest intensity of all channels. This automatic setting is done each time the channel searching function is launched.

The image display device according to the present invention on the other hand provides an automatic menu language update function by which the display device is operable to dynamically change language settings in response a predetermined set of conditions are fulfilled as provided by the characterizing features defined in Claim 1.

Primary object of the present invention is to provide a system and method by which management of the menu language setting in an image display device is automatically configurable.

The present invention proposes a method for operating an image display device, having an automatic menu language update function. This function is automatically called, upon acknowledging a certain program preference having a certain language. The program being viewed is automatically monitored in order for determining the language thereof so that the image display device modifies the interface language setting in accordance with the spoken language of the program being viewed.

According to the present invention, a method for operating an image display device is proposed, by which users are able to use the image display device in their own language without having to manually fiddle with the settings.

The invention first provides that a given channel being continually viewed for a minimum period of time duration is verified. The language of choice is then determined by means of a digital image processor analysing frames of a broadcast program in said given channel such that a constant visual pattern representing said channel is matched with a corresponding channel logo in a database and the broadcast language of the corresponding channel is determined. The interface menu language can then be automatically changed to a language of choice.

The language of the choice is preferably determined based on the language being presently spoken on the channel whose logo is matched. In other words, a user may view a program presented in a language other than the usual language of the channel. The present invention further ensures that the determined presently spoken language in the channel being viewed is not accompanied with subtitles.

The language setting is changed only on confirmation and with a confirmation dialogue simultaneously provided in a first language being actually used and in a second language which is determined as a language of preference.

Accompanying drawings are given solely for the purpose of exemplifying a system and method by which an image display device is operable, whose advantages over prior art were outlined above and will be explained in brief hereinafter.

The drawings are not meant to delimit the scope of protection as identified in the claims nor should they be referred to alone in an effort to interpret the scope identified in said claims without recourse to the technical disclosure in the description of the present invention.

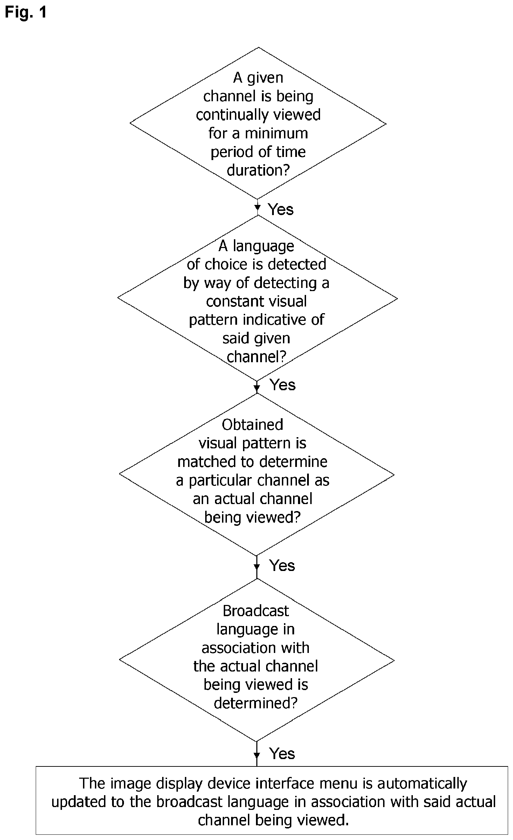

Fig. 1 demonstrates a general flow diagram according to which the image display device of the invention executes the method of operation according to the present invention.

The present invention proposes an image display device enabling a user to interact with the interface menu of an image display language in his/her preferred language so that the user does not need to manually spend a significant amount of time in an effort to individually locate and configure the respective setting.

An image display device can be initially configured to have a certain menu language such as for instance Spanish in a hotel room in Spain. However, a hotel guest watching the image display device may be a foreign visitor in Spain, who would interact with the image display device in his/her native language in a more convenient manner.

An image display device's interface language can be changed any time by selecting a respective menu in the interface environment. This would, however, prove to be relatively problematic for a temporary guest in a hotel room or in any other setup where a temporary user is in question, because the respective menu is not always easily accessible and in order for locating the language setting in the menu, one should be competent in the actual menu language. Or, in reference to the example above, one should ask assistance from the reception desk for setting the language of choice.

It is known that digital and interactive TV systems provide a comprehensive amount of TV channels and programs. A given user's language preference can be determined and the proposed method of the invention can be implemented in the following manner.

The language of choice of a given user can be detected by the image display device by means of a digital image processor analysing frames of a broadcast program to catch a visual pattern indicative of a specific channel. A visual pattern indicative of a specific channel, for example in the form of a letter, emblem or logo, may be detected in the form of a constant visual pattern by analysing consecutive frames of the broadcast program. Since every TV station may have a different visual pattern in this effect, the image display device may be required to be configured in advance to connect to a remote database containing for instance a dynamically updated look-up table of a plurality of stations in association with actually used broadcasting languages. In this regard, only the actual broadcasting language is taken into consideration as any channel can broadcast programs from time to time in a language different from a usual broadcasting language.

Alternatively, the image display device may try to match the obtained visual pattern in a pre-loaded internal database without connecting to a remote server. In a further alternative, the image display device may only transmit a screenshot of the channel being presently viewed to the remote server and a digital image processor in association with the remote server may determine the particular channel the information as to which being conveyed back to the image display device.

To this end, the image display device of the present invention initiates a preferred language update function and first determines the actual language of preference. In this way, an automatic update function is performed such that the user can be presented with an interface language in his/her native or desired language.

The image display device can be first configured by a first user to have a specific menu language. The image display device automatically initiates menu language update procedure upon fulfilment of a set of conditions. To this end, the digital image processor of the image display device locates and catches a constant visual pattern and compares the visual pattern with a plurality of similar visual patterns so as to determine the actual channel being watched. To initiate this procedure, the image display device first acknowledges that a given channel is being continually viewed for a minimum period of time duration, for instance 30 minutes. Upon fulfilment of this condition, the image display device then verifies that no subtitles are active for the channel being viewed. If subtitles are activated and the subtitle language information is available from the broadcaster, the image display device may also update the menu language setting based on this information, provided that a minimum period of time duration elapses. The automatic menu language update function is performed only on confirmation and the respective confirmation dialogue is simultaneously provided in two languages, i.e. in a first language being actually used and in a second language which the image display device has determined as a language of preference.

In a nutshell, the present invention proposes a method for operating an image display device by which users are able to interact with the image display device interface menu in a language of preference, said method for operating an image display device comprising the steps of; a) verifying that a given channel is being continually viewed for a minimum period of time duration, b) detecting a language of choice of a user in said given channel by way of detecting a constant visual pattern indicative of a said given channel being viewed, matching the obtained visual pattern indicative of said given channel being viewed with a plurality of visual patterns so as to determine a particular channel as an actual channel being viewed, determining the broadcast language in association with said actual channel being viewed and, c) automatically updating the image display device interface menu to the broadcast language in association with said actual channel being viewed.

In an embodiment of the present invention, a constant visual pattern indicative of said given channel being viewed is determined by means of a digital image processor of said image display device analysing frames of a broadcast program.

In a further embodiment of the present invention, a constant visual pattern indicative of said given channel being viewed is determined by transmitting a screenshot of the channel being viewed to a remote server and a digital image processor in association with the remote server determines the particular channel the information as to which being conveyed back to said image display device.

In a still further embodiment of the present invention, said step of determining the broadcast language in association with said actual channel being viewed comprises the additional step of connecting to a remote database containing information as to a plurality of channels in association with actually used broadcasting languages thereof.

In a yet still further embodiment of the present invention, said remote database comprises a look-up table of a plurality of channels with their actual broadcasting languages.

In a yet still further embodiment of the present invention, said image display device matches the detected visual pattern in a pre-loaded internal database.

In a yet still further embodiment of the present invention, said step of verifying that the given channel is being continually viewed for a minimum period of time duration also comprises the step of verifying that no subtitles are active for the channel being viewed.

In a yet still further embodiment of the present invention, if subtitles are activated, the image display device updates the interface menu language setting based on the language of subtitles, provided that a minimum period of time duration elapses.

In a yet still further embodiment of the present invention, automatic menu language update function is performed such that a confirmation dialogue is simultaneously provided in a first language being actually used as the interface menu language and in a second language which is determined as a language of preference by the image display device.

The invention is therefore devised under the recognition that an automatic menu language update function by which the display device is operable to dynamically change menu language settings in response to a predetermined set of conditions is obtainable. The image display device acknowledges a certain program preference having a certain language in the manner that the program being viewed is automatically monitored in order for determining the language thereof so that the image display device modifies the interface language setting preferably in accordance with the spoken language of the program being viewed.

## Claims

1. A method for operating an image display device by which users are able to interact with the image display device interface menu in a language of preference, said method for operating an image display device comprising the steps of;
a) verifying that a given channel is being continually viewed for a minimum period of time duration of preferably 30 minutes,
b) detecting a language of preference of a user in said given channel by way of
detecting a constant visual pattern indicative of said given channel being viewed,
and matching the obtained visual pattern indicative of said given channel being viewed with a plurality of visual patterns so as to determine a particular channel as an actual channel being viewed,
and determining the broadcast language in association with said actual channel being viewed and,
c) automatically updating the image display device interface menu to the broadcast language in association with said actual channel being viewed.

2. A method for operating an image display device as in Claim 1, **characterized in that** a constant visual pattern indicative of said given channel being viewed is determined by means of a digital image processor of said image display device analysing frames of a broadcast program.

3. A method for operating an image display device as in Claim 1, **characterized in that** a constant visual pattern indicative of said given channel being viewed is determined by transmitting a screenshot of the channel being viewed to a remote server and a digital image processor in association with the remote server determines the particular channel the information as to which being conveyed back to said image display device.

4. A method for operating an image display device as in Claim 2 or 3, **characterized in that** said step of determining the broadcast language in association with said actual channel being viewed comprises the additional step of connecting to a remote database containing information as to a plurality of channels in association with actually used broadcasting languages thereof.

5. A method for operating an image display device as in Claim 4, **characterized in that** said remote database comprises a look-up table of a plurality of channels with their actual broadcasting languages.

6. A method for operating an image display device as in Claim 2, **characterized in that** said image display device matches the detected visual pattern in a pre-loaded internal database.

7. A method for operating an image display device as in Claim 4, **characterized in that** said step of verifying that the given channel is being continually viewed for a minimum period of time duration also comprises the step of verifying that no subtitles are active for the channel being viewed.

8. A method for operating an image display device as in Claim 1, **characterized in that** if subtitles are activated, the image display device updates the interface menu language setting based on the language of subtitles, provided that a minimum period of time duration elapses.

9. A method for operating an image display device as in any previous Claims, **characterized in that** automatic menu language update function is performed such that a confirmation dialogue is simultaneously provided in a first language being actually used as the interface menu language and in a second language which is determined as a language of preference by the image display device.

## Patentansprüche

1. Verfahren zum Betreiben einer Bildanzeigevorrichtung, mit der die Benutzer in der Lage sind, mit dem Bildanzeigevorrichtung- Schnittstellenmenu in einer bevorzugten Sprache zu interagieren, wobei das Verfahren zum Betreiben einer Bildanzeigevorrichtung die folgenden Schritte aufweist;
a) Verifizieren, dass ein gegebener Kanal kontinuierlich für eine minimale Zeitdauer von vorzugsweise 30 Minuten betrachtet wird,
b) Detektieren einer bevorzugten Sprache eines Benutzers in dem gegebenen Kanal durch Detektieren eines konstanten visuellen Musters, das den betrachteten gegebenen Kanal anzeigt, und
Anpassen des erhaltenen visuellen Musters, das anzeigt, dass der gegebene Kanal mit einer Vielzahl von visuellen Mustern betrachtet wird, um einen jeweiligen Kanal als einen tatsächlich betrachteten Kanal zu bestimmen, und
Bestimmen der Rundfunksprache in Verbindung mit dem tatsächlich betrachteten Kanal und
c) automatisches Aktualisieren des Bildanzeigevorrichtung-Schnittstellenmenüs auf die Rundfunksprache in Verbindung mit dem tatsächlich betrachteten Kanal.

2. Verfahren zum Betreiben einer Bildanzeigevorrichtung nach Anspruch 1, **dadurch gekennzeichnet dass,** ein konstantes visuelles Muster, das ein Anzeichen für den gegebenen Kanal ist, welches betrachtet wird, mittels eines digitalen Bildprozessors der Bildanzeigevorrichtung, der der Rahmen eines Rundfunkprogramms analysiert, bestimmt wird.

3. Verfahren zum Betreiben einer Bildanzeigevorrichtung nach Anspruch 1, **dadurch gekennzeichnet dass,** ein konstantes visuelles Muster, das ein Anzeichen für den gegebenen Kanal ist, welches betrachtet wird, durch Übertragen eines Screenshots des betrachteten Kanals an einen entfernten Server und ein digitaler Bildprozessor in Verbindung mit dem entfernten Server den bestimmten Kanal die Information darüber, bezüglich welcher zu der Bildanzeigevorrichtung zurückübertragen wird.

4. Verfahren zum Betreiben einer Bildanzeigevorrichtung nach Anspruch 2 oder 3, **dadurch gekennzeichnet dass,** der Schritt des Bestimmens der Rundfunksprache in Verbindung mit dem tatsächlich betrachteten Kanal den zusätzlichen Schritt des Verbindens mit einer entfernten Datenbank umfasst, die Information bezüglich mehrerer Kanäle in Verbindung mit tatsächlich verwendeten Rundfunksprachen davon enthält.

5. Verfahren zum Betreiben einer Bildanzeigevorrichtung nach Anspruch 4, **dadurch gekennzeichnet dass,** die entfernte Datenbank eine Nachschlagetabelle einer Mehrzahl von Kanälen mit ihren tatsächlichen Rundfunksprachen umfasst.

6. Verfahren zum Betreiben einer Bildanzeigevorrichtung nach Anspruch 2, **dadurch gekennzeichnet dass,** dass die Bildanzeigevorrichtung das erkannte visuelle Muster in einer vorgeladenen internen Datenbank anpasst.

7. Verfahren zum Betreiben einer Bildanzeigevorrichtung nach Anspruch 4, **dadurch gekennzeichnet dass,** dass der Schritt des Verifizierens, dass der gegebene Kanal kontinuierlich für eine minimale Zeitdauer betrachtet wird, auch den Schritt des Verifizierens, dass keine Untertitel für den betrachteten Kanal aktiv sind, umfasst.

8. Verfahren zum Betreiben einer Bildanzeigevorrichtung nach Anspruch 1, **dadurch gekennzeichnet dass** wenn Untertitel aktiviert sind, die Bildanzeigevorrichtung die Spracheinstellung des Schnittstellenmenüs basierend auf der Sprache der Untertitel aktualisiert, vorausgesetzt, dass eine minimale Zeitdauer verstreicht.

9. Verfahren zum Betreiben einer Bildanzeigevorrichtung nach einem der vorangehenden Ansprüche, **dadurch gekennzeichnet dass,** eine automatische Menüsprachaktualisierungsfunktion derart ausgeführt wird, dass ein Bestätigungsdialog in einer ersten Sprache, die tatsächlich als die Schnittstellenmenüsprache verwendet wird, und in einer zweiten Sprache, die von der Bildanzeigevorrichtung als bevorzugte Sprache bestimmt wird, gleichzeitig vorgesehen wird.

## Revendications

1. Procédé pour faire fonctionner un dispositif d'affichage d'image par lequel les utilisateurs peuvent interagir avec le menu d'interface du dispositif d'affichage d'image dans une langue de préférence, ledit procédé pour faire fonctionner un dispositif d'affichage d'image comprenant les étapes de:
a) vérifier qu'un canal donné est continuellement visualisé pendant une durée minimale de préférence de 30 minutes,
b) détecter une langue de préférence d'un utilisateur dans ledit canal donné en détectant un motif visuel constant indiquant que ledit canal donné est visualisé, et
faire correspondre le motif visuel obtenu indiquant que ledit canal donné est visualisé avec une pluralité de motifs visuels de manière à déterminer un canal particulier en tant que canal réel étant visualisé, et
déterminer la langue de diffusion en association avec ledit canal réel étant visualisé et,
c) mettre automatiquement à jour le menu d'interface du dispositif d'affichage d'image vers la langue de diffusion en association avec ledit canal réel en cours de visualisation.

2. Procédé pour faire fonctionner un dispositif d'affichage d'image selon la revendication 1, **caractérisé en ce qu'**un motif visuel constant indiquant ledit canal donné étant visualisé est déterminé au moyen d'un processeur d'image numérique dudit dispositif d'affichage d'image analysant des trames d'un programme diffusé.

3. Procédé pour faire fonctionner un dispositif d'affichage d'image selon la revendication 1, **caractérisé en ce qu'**un motif visuel constant indiquant que ledit canal donné est visualisé est déterminé en transmettant une capture d'écran du canal en cours de visualisation à un serveur distant et un processeur d'image numérique en association avec le serveur distant détermine le canal particulier auquel les informations sont renvoyées ledit dispositif d'affichage d'image.

4. Procédé pour faire fonctionner un dispositif d'affichage d'image selon la revendication 2 ou 3, **caractérisé en ce que** ladite étape de détermination de la langue de diffusion en association avec ledit canal réel visualisé comprend l'étape supplémentaire de connexion à une base de données distante contenant une pluralité de canaux en association avec les langues de diffusion effectivement utilisées.

5. Procédé pour faire fonctionner un dispositif d'affichage d'image selon la revendication 4, **caractérisé en ce que** ladite base de données distante comprend une table de consultation d'une pluralité de canaux avec leurs langues de diffusion réelles.

6. Procédé pour faire fonctionner un dispositif d'affichage d'image selon la revendication 2, **caractérisé en ce que** ledit dispositif d'affichage d'image correspond au motif visuel détecté dans une base de données interne préchargée.

7. Procédé pour faire fonctionner un dispositif d'affichage d'image selon la revendication 4, **caractérisé en ce que** ladite étape consistant à vérifier que le canal donné est continuellement visualisé pendant une durée minimale comprend également l'étape consistant à vérifier qu'aucun sous-titre n'est actif pour le canal en cours de visualisation.

8. Procédé pour faire fonctionner un dispositif d'affichage d'image selon la revendication 1, **caractérisé en ce que** si les sous-titres sont activés, le dispositif d'affichage d'image met à jour le réglage de la langue du menu d'interface en fonction de la langue des sous-titres, à condition qu'une durée minimale soit écoulée.

9. Procédé pour faire fonctionner un dispositif d'affichage d'image selon l'une quelconque des revendications précédentes, **caractérisé en ce que** la fonction de mise à jour automatique du menu est exécutée de manière à fournir simultanément un dialogue de confirmation dans une première langue utilisée comme langue d'interface et dans une seconde langue est déterminé comme une langue de préférence par le dispositif d'affichage d'image.
